**Europäisches Patentamt**

**European Patent Office**

**Office européen des brevets**

(19)

(11) Veröffentlichungsnummer: **0 212 311**
**B1**

(12)

# EUROPÄISCHE PATENTSCHRIFT

(45) Veröffentlichungstag der Patentschrift:
07.03.90

(21) Anmeldenummer: 86110158.2

(22) Anmeldetag: 23.07.86

(51) Int. Cl.⁴: **F02C 3/28**, F01K 23/08,
C10J 3/00

(54) Kombiniertes Gas- und Dampfturbinenkraftwerk.

(30) Priorität: 05.08.85 DE 3528092

(43) Veröffentlichungstag der Anmeldung:
04.03.87 Patentblatt 87/10

(45) Bekanntmachung des Hinweises auf die Patenterteilung:
07.03.90 Patentblatt 90/10

(84) Benannte Vertragsstaaten:
AT BE CH DE FR GB IT LI LU NL SE

(56) Entgegenhaltungen:
EP-A- 0 137 152
DE-A- 3 319 711
GB-A- 2 029 855

(73) Patentinhaber: Siemens Aktiengesellschaft,
Wittelsbacherplatz 2, D-8000 München 2(DE)

(72) Erfinder: Goebel, Konrad, Dipl.-Ing., Stettiner Strasse 5,
D-8520 Erlangen(DE)
Erfinder: Schiffers, Ulrich, Dr., Moritzbergstrasse 1,
D-8501 Eckental(DE)

ACTORUM AG

## Beschreibung

Die Erfindung bezieht sich auf ein kombiniertes Gas- und Dampfturbinenkraftwerk mit einem dem Gasturbinenkraftwerksteil vorgeschalteten Kohlevergaser, einer den Kohlevergaser mit der Brennkammer der Gasturbine verbindenen Brenngasleitung, einer dem Kohlevergaser vorgeschalteten Luftzerlegungsanlage mit einer den Kohlevergaser speisenden Sauerstoffleitung und einer zur Brennkammer der Gasturbine führenden Stickstoffleitung, einem in der Stickstoffleitung eingeschalteten Stickstoffverdichter und mindestens einem der Brennkammer der Gasturbine, und der Luftzerlegungsanlage vorgeschalteten Luftverdichter.

Bei einem durch die DE-OS 33 19 711 bekannten, kombinierten Gas- und Dampfturbinenkraftwerk wird das den Kohlevergaser verlassende heiße Rohgas in einer einen Hochdruckdampferzeuger, einen Rohgas-Reingas-Wärmetauscher und einen Niederdruckdampferzeuger umfassenden Wärmetauscheranlage abgekühlt, bevor es in eine Gasreinigungsanlage eingeleitet wird. Die dabei freiwerdende Wärme wird im Hochdruckdampferzeuger zur Erzeugung von Hochdruckdampf, im Rohgas-Reingas-Wärmetauscher zur Wiederaufheizung des aus der Gasreinigungsanlage der Brennkammer der Gasturbine zuströmenden Reingases und im Niederdruckdampferzeuger zur Erzeugung von Niederdruckdampf verwendet. Der so erzeugte Hoch- und Niederdruckdampf wird dem Dampfturbinenkraftwerksteil zugeleitet. Darüber hinaus wird bei diesem bekannten Kraftwerk weiterer Hochdruckdampf in dem vom Abgasstrom der Gasturbine durchströmten Abhitzedampferzeuger erzeugt. Es ist ein besonderer Vorzug eines solchen Gas- und Dampfturbinenkraftwerks, daß seine Leistung in weiten Grenzen variiert werden kann. Selbst bei vollständigem Abschalten der Gasturbine und dem Aufhören der Dampferzeugung in dem der Gasturbine nachgeschalteten Abhitzedampferzeuger kann die Dampfturbine mit Hilfe des in der dem Kohlevergaser nachgeschalteten Wärmetauscheranlage erzeugten Dampfes - wenn auch mit verringerter Leistung - weiter betrieben werden, so daß selbst in diesem extremen Fall noch der Eigenbedarf an elektrischer Leistung über den von der Dampfturbine angetriebenen Generator gedeckt werden kann.

Durch die EP-A 0 137 152, die ein Verfahren zum Betrieb einer mit einer Brennstoffvergasungsanlage kombinierten Gasturbinenanlage zum Gegenstand hat, ist ein Gas- und Dampfturbinenkraftwerk bekannt, bei der die Brennkammer der Gasturbine mit dem in einem Kohlevergaser erzeugten und gereinigten Gas betrieben wird und die Abgase der Gasturbine zur Bereitstellung des Dampfes für die Dampfturbine herangezogen werden. Bei diesem Gas- und Dampfturbinenkraftwerk ist dem Kohlevergaser eine Luftzerlegungsanlage vorgeschaltet, die den Kohlevergaser mit Sauerstoff versorgt. Der verbleibende Stickstoff wird der Brennkammer der Gasturbine zur Absenkung der Flammtemperatur zugeführt. Die der Luftzerlegungsanlage zuströmende, verdichtete Luft wird bei diesem Gas- und Dampfturbinenkraftwerk vor Einleitung in die Luftzerlegungsanlage durch einen Wärmetauscher geleitet, in dem die verdichtete Luft abgekühlt und gleichzeitig das zur Brennkammer der Gasturbine strömendes Reingas aufgeheizt wird. Durch diese Anordnung wird der Leistungsbedarf der Luftzerlegungsanlage vermindert und die der Brennkammer der Gasturbine zuströmende Wärmemenge erhöht.

Der Erfindung liegt die Aufgabe zugrunde, die bei einem solchen kombinierten Gas- und Dampfturbinenkraftwerk bei der Luftverdichtung frei werdende Wärme zwecks Erhöhung des Gesamtwirkungsgrades noch rationeller auszunutzen.

Diese Aufgabe wird durch die Merkmale des Anspruches 1 gelöst. Vorteilhafte Weiterbildungen sind in den Ansprüchen 2 bis 6 beschrieben.

Dadurch, daß in der zur Luftzerlegungsanlage führenden Luftleitung in Strömungsrichtung hinter dem endverdichtenden Luftverdichter eine Wärmetauscheranlage eingesetzt ist, in der die Stickstoffleitung und die Reingasleitung an separaten, von der endverdichteten Luft durchströmten Wärmetauschern angeschlossen sind, wird es möglich, die unterschiedlichen Temperaturniveaus des anströmenden Reingases und des anströmenden Stickstoffes besser aneinander anzupassen. Das heißt, die Temperatur der der Luftzerlegungsanlage zuströmenden Luft läßt sich so stärker absenken und der Gesamtwärmeinhalt der der Brennkammer der Gasturbine zuströmenden Gase etwas mehr erhöhen.

Eine besonders zweckmäßige Lösung ergibt sich, wenn in Ausgestaltung der Erfindung die Reingasleitung und die Stickstoffleitung in Strömungsrichtung hinter den Druckerhöhungsverdichter getrennt in separate, von Verdichterluft durchströmte Wärmetauscher angeschlossen und anschließend zu einer zur Brennkammer der Gasturbine führenden Brenngasleitung zusammengeführt werden. In diesem Fall werden gegebenenfalls betriebsbedingt verbleibende, geringe Temperaturunterschiede dieser Gase vor Einleitung in die Brennkammer der Gasturbine wieder ausgeglichen.

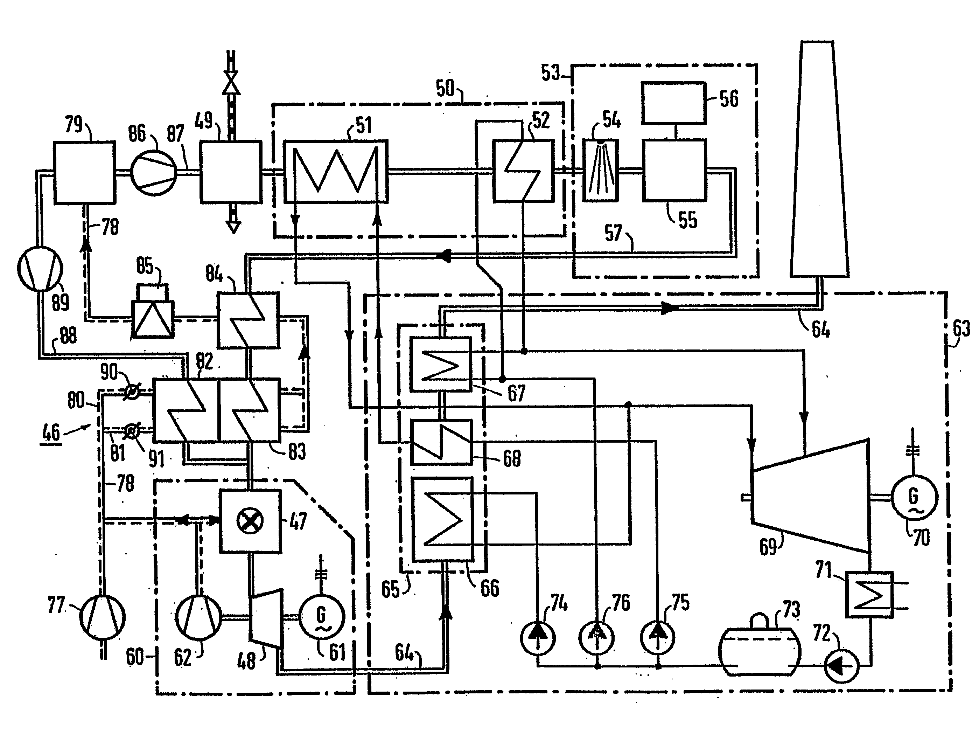

Weitere Einzelheiten der Erfindung werden anhand eines in der Figur dargestellten Ausführungsbeispieles erläutert.

Die Figur zeigt eine schematische Darstellung der Anordnung und Verknüpfung der einzelnen Bausteine eines erfindungsgemäßen Gas- und Dampfturbinenkraftwerkes.

Dieses kombinierte Gas- und Dampfturbinenkraftwerk 46 besteht im wesentlichen aus einem Gasturbinenkraftwerksteil 60, einem Dampfturbinenkraftwerksteil 63, einem dem Gasturbinenkraftwerksteil vorgeschalteten Kohlevergaser 49 mit einer dem Kohlevergaser vorgeschalteten Luftzerlegungsanlage 79, einer dem Kohlevergaser rohgasseitig nachgeschalteten Wärmetauscheranlage 50 und einer rohgasseitig nachgeschalteten Gasreinigungsanlage 53. Die Wärmetauscheranlage 50 umfaßt einen Hochdruckdampferzeuger 51 und einen Niederdruckdampferzeuger 52. Die rohgasseitig der Wärmetauscheranlage 50 nachgeschaltete Gasreinigungsanlage 53 umfaßt im Ausführungsbeispiel einen Rohgaswäscher 54, eine Schwefelwasserstoffabsorptionsanlage 55 und eine Schwefelgewinnungsanlage 56. Der Gasturbinenkraftwerksteil 60 umfaßt eine Gasturbine 48 sowie je einen von der Gasturbine angetriebenen Luftverdichter 62 und Generator 61. An den Luftverdichter 62 ist eine sowohl zur Brennkammer 47 der Gasturbine 48 als auch zur Luftzerlegungsanlage 79 führende Luftleitung 78 angeschlossen. An dieser Luftleitung 78 ist parallel zu dem von der Gasturbine 48 angetriebenen Luftverdichter 79 ein weiterer, bedarfsweise zuschaltbarer, separat antreibbarer Luftverdichter 77 angeschlossen. Die von den beiden Luftverdichtern 64, 77 zur Luftzerlegungsanlage 79 führende Luftleitung 78 ist jedoch zunächst in zwei Zweige 80, 81 aufgeteilt, von denen der eine Zweig 81 einen Stickstoff-Luftwärmetauscher 82 und der andere Zweig 80 einen Reingas-Luftwärmetauscher 83 durchströmt. Hinter diesen beiden Wärmetauschern 82, 83 sind die beiden Zweige 80, 81 der Luftleitung wieder zusammengeführt und an einen weiteren Reingas-Luftwärmetauscher 84 und an einem diesen nachgeschalteten Nachkühler 85 angeschlossen. In Strömungsrichtung hinter dem Nachkühler 85 führt die Luftleitung 78 zur Luftzerlegungsanlage 79. Die die Luftzerlegungsanlage verlassende Sauerstoffleitung 87 ist über einen Sauerstoffverdichter 86 an den Kohlevergaser 49 angeschlossen.

Die von oben in den Kohlevergaser 49 führende Kohleeintragsleitung und die unten aus dem Kohlevergaser herausführende Ascheaustragsleitung sind nur angedeutet. Die die Luftzerlegungsanlage 79 verlassende Stickstoffleitung 88 ist mit einem Stickstoffverdichter 89 versehen. Sie führt in Strömungsrichtung hinter dem Stickstoffverdichter 89 in den Stickstoff-Luftwärmetauscher 82 und mündet dahinter in die von der Gasreinigungsanlage 53 kommende und durch die Reingas-Luftwärmetauscher 84, 83 führende Reingasleitung 57. Ausgehend von dieser Mischstelle, in der das aufgeheizte Reingas mit dem aufgeheizten Stickstoff vermischt wird, führt eine sogenannte Brenngasleitung in die Brennkammer 47 der Gasturbine 48.

Die Abgasleitung 64 der Gasturbine 48 führt durch eine Abhitzedampferzeugeranlage 65 und mündet nach dem Passieren derselben in einen Kamin. Die Abhitzedampferzeugeranlage umfaßt in Strömungsrichtung des Abgases nacheinander einen Hochdruckdampferzeuger 66, eine Speisewasserheizfläche 68 und einen Niederdruckdampferzeuger 67.

Die Dampfturbine 69 des Dampfturbinenkraftwerkes 63 ist an einen Generator 70 angekuppelt und ist abdampfseitig an einen Kondensator 71 angeschlossen. Der Kondensator ist über eine Kondensatpumpe 72 an einen Speisewasserbehälter 73 angeschlossen. Über an den Speisewasserbehälter angeschlossene Speisewasserpumpen 74, 75, 76 werden die diversen Speisewasserheizflächen und Dampferzeugerheizflächen der Abhitzedampferzeugeranlage 65 bzw. der dem Kohlevergaser 49 nachgeschalteten Wärmetauscheranlage 50 versorgt. Die Dampferzeuger und Überhitzerheizflächen 51, 52, 66, 67 in der dem Kohlevergaser nachgeschalteten Wärmetauscheranlage 50 und in der Abhitzedampferzeugeranlage 65 sind ausgangsseitig entsprechend ihrem Druckniveau an entsprechende Einströmstutzen der Dampfturbine 69 angeschlossen.

Beim Betrieb dieses kombinierten Gas- und Dampfturbinenkraftwerkes 41 wird durch den auf der Welle der Gasturbine 48 sitzenden Luftverdichter 62 Luft über die Luftleitung 78 sowohl in die Brennkammer 47 der Gasturbine 48, als auch über die Wärmetauscher 82, 83, 84 und den Nachkühler 85 in die Luftzerlegungsanlage 5 befördert. Die nach der Luftverdichtung etwa 200 bis 400°C heiße Luft gibt dabei ihre fühlbare Wärme im sowohl an das über die Reingasleitung 57 zur Brennkammer 47 der Gasturbine 48 strömende Reingas, als auch an den von der Luftzerlegungsanlage 79 kommenden und in die Stickstoffleitung 88 zur Brennkammer 47 strömenden, verdichteten Stickstoff ab. Infolge der Aufspaltung der zur Luftzerlegungsanlage führenden Luftleitung 78 in zwei Zweige 80, 81 und dem Einbau je eines Regulierventiles 90, 91 in diese beiden Zweige wird es möglich, die Luftströme in diesen beiden Zweigen so zu regeln, daß letztendlich sowohl der Stickstoff, als auch das Reingas in den Wärmetauschern 82, 83 auf annähernd die gleiche Temperatur aufgeheizt werden können. Danach kann mit der etwas abgekühlten und wieder zusammengeführten Verdichterluft das mit 10-80° C aus der Gasreinigungsanlage abströmende, kalte Reingas in dem Reingas-Luftwärmetauscher 84 vorgewärmt werden. Weitere Wärme wird der der Luftzerlegungsanlage zuströmenden Verdichterluft in dem Nachkühler 85 entzogen.

In der Luftzerlegungsanlage 79 wird die Luft unter Ausnutzung der unterschiedlichen Siedepunkte des Stickstoffes und Sauerstoffes zerlegt und der so gewonnene Sauerstoff über den Sauerstoffverdichter 86 in den mit Überdruck betriebenen Kohlevergaser 49 gedrückt. Diesem Kohlevergaser wird in hier nicht weiter dargestellter Weise über die Kohleeintragsleitung feingemahlene Kohle zugeführt. Das im Kohlevergaser erzeugte Rohgas gibt seine Wärme in der den Kohlevergaser nachgeschalteten Wärmetauscheranlage 50 an die dort eingebauten Hochdruck- und Niederdruckdampferzeuger 51, 52 ab. Nach dem Durchströmen der Wärmetauscheranlage 50 gelangt das abgekühlte Rohgas in die Gasreinigungsanlage 53. In deren Rohgaswäscher 54 werden zunächst Verunreinigungen des Rohgases und in der nachgeschalteten Schwefel-Wasserstoffabsorptionsanlage 55 weitere Restgase sowie Schwefelverbindungen abgetrennt, wobei die Schwefelverbindungen im Ausführungsbeispiel in der angeschlossenen Schwefelgewinnungsanlage 56 zu elementarem Schwefel umgewandelt werden.

Das die Gasturbine 46 verlassende Abgas strömt über die Abgasleitung 64 in die Abhitzedampferzeugeranlage 65 und gibt dort seine Wärme an den Hochdruckdampferzeuger 66, der Speisewasserheizfläche 68 und den Niederdruckdampferzeuger 67 ab. Auf niedrige Temperaturen abgekühlt wird es in den Kamin geleitet.

Es ist ein Vorteil dieser kombinierten Gas- und Dampfturbinenanlage 46, daß die gesamte fühlbare Wärme des dem Kohlevergaser 49 entströmenden Rohgases wie auch die gesamte fühlbare Wärme des die Gasturbine 48 verlassenden heißen Abgases zur Erzeugung von Hoch- und Niederdruckdampf verwendet werden kann und nicht auch noch zur Aufheizung des der Brennkammer 47 der Gasturbine 48 zuströmenden Brenn- bzw. Reingases herangezogen zu werden braucht. Vielmehr wird die für die Aufheizung des der Brennkammer der Gasturbine zuströmenden Brenngases benötigte Heizleistung vollständig aus der Abwärme der Verdichterluft gedeckt. Dabei ist es besonders vorteilhaft, daß der Stickstoff und das Reingas, die beide auf verschiedene Temperaturniveaus anströmen, in separaten Wärmetauschern 82, 83, 84 aufgeheizt werden. Insbesondere steht bei dieser Schaltanordnung die direkt vom Luftverdichter 62 kommende, ca. 300° C bis 400° C heiße Verdichterluft zur Endaufheizung des in einem weiteren Reingas-Luft-Wärmetauscher 84 bereits vorgewärmten Reingases und des durch den in der Stickstoffleitung 88 eingeschalteten Druckerhöhungsverdichter 89 auf ca. 90 bis 200° C aufgeheizten, verdichteten Stickstoffes zur Verfügung. Die in diesen beiden Wärmetauschern 82, 83 etwas abgekühlte Verdichterluft wird anschließend zusammengeführt und in dem weiteren Reingas-Luft-Wärmetauscher 84 dazu verwendet, das von der Gasreinigungsanlage 53 anströmende, nur etwa 20° C bis 40° C warme Reingas auf ein Temperaturniveau vorzuwärmen, das dem Temperaturniveau des Stickstoffes hinter dem in der Stickstoffleitung 88 eingeschalteten Druckerhöhungsverdichter 89 in etwa entspricht. So kann bei dieser Bauweise zusätzlich noch eine etwas weitere Aufheizung der der Brennkammer 47 der Gasturbine 62 zuströmenden Brenngase und damit eine etwas höhere Gasturbinenleistung erreicht werden, als wenn nur ein Luft-Brenngas-Wärmetauscher verwendet würde.

Bezugszeichenliste

Gas- und Dampfturbinenkraftwerk 1
Gasturbinenkraftwerksteil 2
Dampfturbinenkraftwerksteil 3
Kohlevergaser 4
Luftzerlegungsanlage 5
Wärmetauscheranlage 6
Gasreinigungsanlage 7
Hochdruckdampferzeuger 8
Niederdruckdampferzeuger 9
Rohgaswäscher 10
Schwefelwasserstoffabsorptionsanlage 11
Schwefelgewinnungsanlage 12
Gasturbine 13
Luftverdichter 14
Generator 15
Brennkammer 16
Luftleitung 17
Luftverdichter 18
Brenngas-Luft-Wärmetauscher 19
Nachkühler 20
Sauerstoffleitung 21
Sauerstoffverdichter 22
Kohleeintragsleitung 23
Ascheaustragsleitung 24

Stickstoffleitung 25
Stickstoffverdichter 26
Reingasleitung 27
Mischstelle 28
Brenngasleitung 29
Abgasleitung 30
Abhitzedampferzeugeranlage 31
Kamin 32
Hochdruckdampferzeuger 33
Speisewasserheizfläche 34
Niederdruckdampferzeuger 35
Dampfturbine 36
Generator 37
Kondensator 38
Kodensatpumpe 39
Speisewasserbehälter 40
Speisewasserpumpe 41, 42, 43
Einströmstutzen 44, 45
Gas- und Dampfturbinenkraftwerk 46
Brennkammer 47
Gasturbine 48
Kohlevergaser 49
Wärmetauscheranlage 50
Hochdruckdampferzeuger 51
Niederdruckdampferzeuger 52
Gasreinigungsanlage 53
Rohgaswäscher 54
Schwefelwasserstoffabsorptionsanlage 55
Schwefelgewinnungsanlage 56
Reingasleitung 57
Wärmetauscherheizfläche 58, 59
Gasturbinenkraftwerksteil 60
Generator 61
Luftverdichter 62
Dampfturbinenkraftwerksteil 63
Abgasleitung 64
Abhitzedampferzeugeranlage 65
Hochdruckdampferzeuger 66
Neiderdruckdampferzeuger 67
Speisewasserheifläche 68
Dampfturbine 69
Generator 70
Kondensator 71
Kondensatpumpe 72
Speisewasserbehälter 73
Speisewasserpumpe 74, 75, 76
Luftverdichter 77
Luftleitung 78
Luftzerlegungsanlage 79
Zweig 80, 81
Stickstoff-Luft-Wäremtauscher 82
Reingas-Luft-Wäremtauscher 83, 84
Nachkühler 85
Sauerstoffverdichter 86
Sauerstoffleitung 87
Stickstoffleitung 88
Stickstoffverdichter 89
Regulierventil 90, 91

**Patentansprüche**

1. Kombiniertes Gas- und Dampfturbinenkraftwerk (46) mit einem dem Gasturbinenkraftwerksteil (60) vorgeschalteten Kohlevergaser (49), einer den Kohlevergaser mit der Brennkammer (47) der Gasturbine (48) verbindenden Reingasleitung (57), einer dem Kohlevergaser vorgeschalteten Luftzerlegungsanlage (79) mit einer den Kohlevergaser speisenden Sauerstoffleitung (87) und einer zur Brennkammer (47) der Gasturbine (48) führenden Stickstoffleitung (88), einem in der Stickstoffleitung eingeschalteten Stickstoffverdichter (89) und mindestens einem der Brennkammer der Gasturbine und der Luftzerlegungsanlage vorgeschalteten Luftverdichter (62, 77), dadurch gekennzeichnet, daß in der zur Luftzerlegungsanlage (79) führenden Luftleitung (78) in Strömungsrichtung hinter dem endverdichtenden Luftverdichter (62, 77) eine Wärmetauscheranlage (82, 83, 84) eingesetzt ist, in der die Stickstoffleitung (88) und die Reingasleitung (57) an separate, von der endverdichteten Luft durchströmte Wärmetauscher (82, 83) angeschlossen sind.

2. Kombiniertes Gas- und Dampfturbinenkraftwerk nach Anspruch 1, dadurch gekennzeichnet, daß die Reingasleitung (57) und die Stickstoffleitung (88) in Strömungsrichtung hinter deren Druckerhöhungsverdichter (89) getrennt an separate, von Verdichterluft durchströmte Wärmetauscher (82, 83, 84) angeschlossen und anschließend zu einer zur Brennkammer (47) der Gasturbine (48) führenden Brenngasleitung zusammengeführt werden.

3. Kombiniertes Gas- und Dampfturbinenkraftwerk nach Anspruch 1 oder 2, dadurch gekennzeichnet, daß die beiden Wärmetauscher (82, 83) luftseitig parallel geschaltet sind.

4. Kombiniertes Gas- und Dampfturbinenkraftwerk nach einem der Ansprüche 1 bis 3, dadurch gekennzeichnet, daß der Stickstoff in dem zugeordneten Luft-Stickstoff-Wärmetauscher (82) auf eine höhere Endtemperatur aufheizbar ist als das Reingas in dem zugeordneten Luft-Reingas-Wärmetauscher (83).

5. Kombiniertes Gas- und Dampfturbinenkraftwerk nach einem der Ansprüche 1 bis 4, dadurch gekennzeichnet, daß die Luftdurchsätze durch die beiden Wärmetauscher (82, 83) zur Aufheizung des Reingases und des Stickstoffes auf gleiche Endtemperaturen unterschiedlich einstellbar sind.

6. Kombiniertes Gas- und Dampfturbinenkraftwerk nach einem der Ansprüche 1 bis 5, dadurch gekennzeichnet, daß die Luftleitungen (80, 81) am Ausgang des Reingas-Luft-Wärmetauschers (83) und des Stickstoff-Luft-Wärmetauschers (82) wieder zusammengeführt sind und an einem weiteren, dem Reingas-Luft-Wärmetauscher (83) reingasseitig vorgeschalteten, zusätzlichen Reingas-Luft-Wärmetauscher (84) angeschlossen sind.

## Claims

1. Combined gas and steam turbine power station (46) with a coal gasifier (49) connected upstream of the gas turbine power station part (60), a pure gas pipe (57) connecting the coal gasifier with the combustion chamber (47) of the gas turbine (48), an air separation plant (79) connected upstream of the coal gasifier with an oxygen pipe (87) feeding the coal gasifier and a nitrogen pipe (88) leading to the combustion chamber (47) of the gas turbine (48), a nitrogen compressor (89) connected in the nitrogen pipe, and at least one air compressor (62, 77) connected upstream of the combustion chamber of the gas turbine and the air separation plant, characterised in that in the air pipe (78) leading to the air separation plant (79) in the direction of flow downstream of the end compressing air compressor (62, 77), a heat exchange device (82, 83, 84) is fitted, in which the nitrogen pipe (88) and the pure gas pipe (57) are connected to separate heat exchangers (82, 83) through which the end compressing air flows.

2. Combined gas and steam turbine power station according to Claim 1, characterised in that the pure gas pipe (57) and the nitrogen pipe (88) in the direction of flow downstream of their pressure increase compressor (89) are divided and connected to separate heat exchangers (82, 83, 84) through which compressor air flows, and are finally brought together to a fuel gas pipe leading to the combustion chamber (47) of the gas turbine (48).

3. Combined gas and steam turbine power station according to Claim 1 or 2, characterised in that the two heat exchangers (82, 83) are connected in parallel on the air side.

4. Combined gas and steam turbine power station according to one of Claims 1 to 3, characterised in that the nitrogen in the associated air-nitrogen heat exchanger (82) can be heated to a higher final temperature than the pure gas in the associated air-pure gas heat exchanger (83).

5. Combined gas and steam turbine power station according to one of Claims 1 to 4, characterised in that the air throughput through the two heat exchangers (82, 83) can be differently adjusted to the same final temperature in order to heat the pure gas and the nitrogen.

6. Combined gas and steam turbine power station according to one of Claims 1 to 5, characterised in that the air pipes (80, 81) at the outlet of the pure gas-air heat exchanger (83) and of the nitrogen-air heat exchanger (82) are brought together again and connected to another additional pure gas-air heat exchanger (84), connected on the pure gas side upstream of the pure gas-air heat exchanger (83).

## Revendications

1. Centrale électrique combinée à turbine à gaz et à turbine à vapeur (46), comprenant un gazogène à charbon (49) en amont de la partie de centrale à turbine à gaz (60), un conduit pour le gaz épuré (57) mettant le gazogène à charbon en communication avec la chambre de combustion (47) de la turbine à gaz (48), une installation de fractionnement de l'air (69) montée en amont du gazogène à charbon et ayant un conduit pour l'oxygène (87) alimentant le gazogène à charbon et un conduit pour l'azote (88) menant à la chambre de combustion (47) de la turbine à gaz (48), un compresseur d'azote (89) monté sur le conduit pour l'azote, et au moins un compresseur d'air (62, 77) monté en amont de la chambre de combustion de la turbine à gaz et de l'installation de fractionnement de l'air, caractérisée en ce que, dans le conduit pour l'air (78) menant à l'installation de fractionnement de l'air (79), est montée en aval, dans la direction d'écoulement du compresseur d'air (62, 77) assurant la compression finale, une installation à échangeur de chaleur (82, 83, 84) dans laquelle le conduit pour l'azote (83) et le conduit pour le gaz épuré (57) sont reliés à des échangeurs de chaleur (82, 83) distincts dans lesquels passe de l'air ayant subi la compression finale.

2. Centrale électrique combinée à turbine à gaz et à turbine à vapeur suivant la revendication 1, caractérisée en ce que le conduit pour le gaz épuré (57) et le conduit pour l'azote (88) sont reliés en aval, dans la direction d'écoulement, de leur compresseur augmentant leur pression (89) indépendamment à des échangeurs de chaleur (82, 83, 84) distincts parcourus par l'air du compresseur, et sont réunis ensuite en un conduit pour le gaz de combustion menant à la chambre de combustion (47) de la turbine à gaz (48).

3. Centrale électrique combinée à turbine à gaz et à turbine à vapeur suivant la revendication 1 ou 2, caractérisée en ce que les deux échangeurs de chaleur (82, 83) sont montés en parallèle du côté air.

4. Centrale électrique combinée à turbine à gaz et à turbine à vapeur suivant l'une des revendications 1 à 3, caractérisée en ce que l'azote peut être réchauffée dans l'échangeur de chaleur air-azote (82) qui lui est affecté, à une température finale plus élevée que le gaz épuré dans l'échangeur de chaleur air-gaz épuré (83) qui lui est affecté.

5. Centrale électrique combinée à turbine à gaz et à turbine à vapeur suivant l'une des revendications 1 à 4, caractérisée en ce que les débits d'air dans les deux échangeurs de chaleur (82, 83) peuvent être réglés différemment pour chauffer le gaz épuré et l'azote aux mêmes températures finales.

6. Centrale électrique combinée à turbine à gaz et à turbine à vapeur suivant l'une des revendications 1 à 5, caractérisée en ce que les conduits pour l'air (80, 81) à la sortie de l'échangeur de chaleur gaz épuré-air (83) et de l'échangeur de chaleur azote-air (82) sont réunis et sont reliés à un autre échangeur de chaleur gaz épuré-air (84) supplémentaire monté en amont, du côté gaz épuré de l'échangeur de chaleur gaz épuré-air (83).